# EUROPEAN PATENT SPECIFICATION

(11) **EP 1 613 426 B1**
(45) Date of publication and mention of the grant of the patent: **21.10.2015**
(21) Application number: 03787053.2
(22) Date of filing: 25.11.2003
(51) Int. Cl.: B01J 20/18, B01J 20/28, B01J 29/08, B01J 35/00, C01B 39/02, C01B 39/20, C01B 39/24

(54) **HIGH SURFACE AREA ZEOLITES AND METHODS FOR PREPARATION AND USE THEREOF**
ZEOLITHEN HOHER SPEZIFISCHER OBERFLÄCHE UND VERFAHREN ZU DEREN HERSTELLUNG UND IHRE VERWENDUNG
ZEOLITES A SURFACE ACTIVE ELEVEE ET LEURS PROCEDES DE PREPARATION ET D'UTILISATION

(30) Priority: 27.11.2002 US 429710 P
(43) Date of publication of application: 11.01.2006
(73) Proprietor: PQ Holding, Inc., Wilmington, Delaware 19810 (US)
(72) Inventor: COOPER, David, A., Morrisville, PA 19067 (US); HERTZENBERG, Elliot, P., Wilmington, DE 19803 (US); CORMIER, William, E., Lansdale, PA 19446 (US); MAESEN, Theodorus, L., M., Rodeo, CA 94572 (US)
(74) Representative: Atkinson, Peter Birch
(86) International application number: PCT/US2003/037473
(87) International publication number: WO 2004/050548

(56) References cited:
- EP-A- 0 256 527
- EP-A- 0 421 422
- WO-A1-00/51940
- WO-A1-95/15208
- FR-A- 2 735 764
- GB-A- 1 514 417
- GB-A- 1 514 522
- US-A- 5 242 677

## Description

### Background of the Invention

The present invention relates to high surface area faujasite zeolites, and methods for their preparation and use.

Faujasite materials are a well-known zeolite form and have a wide range of documented uses as catalyst supports, adsorbents, selective separation materials, etc. in the petrochemical and chemical industries and also as pollution control materials for industrial, domestic and automotive use. Faujasite materials, for example, are one of the main zeolitic materials proposed for hydrocracking use. Early findings showed that modification of the basic materials described in US-A-3,130,007 to produce a lowering of the unit cell size, gave improved selectivity to the desired middle distillate, or mid-barrel, products. To achieve this a combination of steam calcination and dealumination, usually acid-dealumination, techniques has been proposed, for example in GB-A-2,114,594; EP-A-98040; EP-A-247,679; and EP-A-421,422,

High silica to alumina molar ratio faujasites are also prepared by a combination of hydrothermal and (acid) dealumination techniques, such as those documented in US-6,054,113 and US-4,840,930, for example.

US-4,840,930 requires, for example, a specific temperature control program for the hydrothermal treatment in an attempt to minimize crystal destruction of the steamed faujasites in the subsequent acid dealumination required to raise the silica to alumina ratio of the zeolite.

US-6,054,113 in contrast requires the use, as starting materials, of "as-synthesized" faujasite having a silicon to aluminum ratio of greater than about 4 to ensure that there is minimal crystallinity loss when subjected to subsequent cation exchange, a single steam calcination and a single acid dealumination. From the Examples, it is clear that the single but lengthy steam calcination applied in this process causes a significant unit cell size reduction from greater than 24.40 Å for the unsteamed zeolite to less than 24.30 Å after steaming; since the desired unit cell size change is effected solely in the hydrothermal treatment step, this minimizes the need for extensive dealumination and also reduces the likelihood of crystal destruction in the acid-treatment step.

US 5,242,677 discloses a stabilized dealuminated zeolite of the faujasite structure having a silica to alumina molar ratio from 40 to 70, a unit cell size of 24.09 to 24.14 Å and a surface area of 700 to 900 m/g. A process for the preparation of the material is also disclosed.

EP 0 256 527 A2 discloses a zeolite of faujasite structure having a surface area by BET/N₂ from 500 to 1000 m²/g. The total Si/Al ratio in the Examples is up to 23.6 and a unit cell size of 24.20 Å is disclosed with a total Si/Al ratio of 68.8 and a surface area of 790 m²/g. The exemplified materials had surface areas from 700 to 800 m²/g.

FR 2 735 764 A discloses a zeolite Y with bulk Si/Al of 78, unit cell 24.17 Å and surface area of 780 m²/g. The claims refer to such zeolites with a bulk Si/Al greater than 40, a unit cell size from 24.1 to 24.2 Å and a surface area in excess of 750 m²/g. A process for preparing such zeolites is also disclosed.

### Summary of the Invention

The inventors have now found that by careful selection of the starting materials, in particular by use of low alkali metal containing faujasite zeolites, and a carefully selected combination of moderate steam calcination conditions plus moderate acid or acid-ammonium dealumination conditions, it has been possible to obtain faujasite zeolites of low unit cell size, high surface area and an exceptional range of silica to alumina molar ratios (up to 1000), whilst still being able to retain a very high crystallinity.

Good activity can be expected from the zeolites of the invention in a number of important uses. In particular, a high adsorption capability for water and for hydrocarbon materials has been found. This has significance for pollution control uses, for example use in automotive catalytic converters.

The present invention provides a zeolite of the faujasite structure according to claim 1. Preferred features are set out in dependent claims.

It has been found that by utilizing a combination of moderate steam calcination treatment and acid-dealumination treatment, it is possible to prepare faujasite-type zeolites which have these very desirable properties in the form of high surface area, low unit cell size and a useful micropore volume, without loss of crystallinity. Care has to be taken in the combination of treatment conditions utilized, on the one hand to avoid severe conditions in order to avoid destruction of the zeolite crystalline structure, but on the other not to utilize too moderate a set of conditions which, whilst producing a crystalline zeolite, will not produce the desirable high surface area of the zeolites of the present invention.

The present invention therefore provides a process for the preparation of a high surface area zeolite of the faujasite structure of claim 1 to 4 comprising
a) providing a starting zeolite of the faujasite structure having a silica to alumina ratio of from about 4.5 to about 6.5 and an alkali level of less than about 1.5%wt;
b) hydrothermally treating said starting zeolite at a temperature of 600 to 850 °C and at a partial pressure of steam of about 0.2 to about 1 atmosphere for a time effective to produce an intermediate zeolite having a unit cell size of from 24.30 to 24.45 Å;
c) contacting the intermediate zeolite with an acidified solution comprising an acid and optionally an ammonium salt under conditions effective to produce to the high surface area zeolite; and
d) recovering the high surface area zeolite.

### Detailed Description of the Invention

Preferably the zeolite of the invention bas a micropore volume of greater than 0.30cm³/g. The zeolite of the invention also preferably has an alkali metal level of less than 0.2 %wt based on the zeolite, most preferably less than 0.1 %wt. The zeolite desirably has as low an alkali level as possible.

The silica to alumina molar ratio (herein also termed 'SAR') of the faujasite zeolite of the invention is the bulk or overall ratio. This can be determined by any one of a number of standard chemical analysis techniques. Such techniques include x-ray fluorescence, atomic absorption, ICP (inductive coupled plasma) or gravimetric techniques. Within error, all will provide the same bulk ratio value.

The unit cell size for a faujasite zeolite is a common property and is accurately assessable by standard techniques. The most common measurement technique is by x-ray diffraction (XRD) following the method of ASTM D3942-80. XRD is also a common technique to use to determine the crystallinity of the zeolite in accordance with a modification of ASTM D3906-097.

Surface area is determined in accordance with the well-known BET (Brunauer-Emmett-Teller) nitrogen adsorption technique, often simply termed the BET method. Herein the general procedure and guidance of ASTM D4365-95 is followed in the application of the BET method to zeolite Y materials. To ensure a consistent state of the sample to be measured, suitably all samples undergo a pretreatment Suitably the pretreatment involves heating the sample, for example to a temperature of 400 to 500 °C, for a time sufficient to eliminate free water, eg 3 to 5 hours. A very suitable pretreatment is to heat each sample to 500 °C for 4 hours. The nitrogen porosimetry measurements utilized in the surface area (BET) determination, are also used to determine the total pore volume and micropore volume for the zeolites of the present invention. Herein 'micropore volume' is used to indicate the total volume of pores having a diameter of less than 20 angstroms. The assessment of micropore volume is particularly derived from the BET measurement techniques by an evaluation method called the t-plot method (or sometimes just termed the t-method) as described in the literature (Journal of Catalysis 3,32 (1964)). Herein 'mesopore volume' is the volume of pores having a diameter of greater than 20 angstroms up to the limit of 600 angstroms. Similarly, 'micropore area' refers to the surface area in pores less 20 angstroms, and 'mesopore area' refers to the surface area in pores between 20 angstroms and 600 angstroms.

All of the above measurement and determination procedures are well known to those skilled in the art.

The low alkali metal starting material may be prepared by techniques well known in the art, for example by re-iterative ammonium ion exchange of higher alkali metal containing zeolite until the desired alkali metal level is achieved, such as is described in US-A-4,085,069, or via the potassium ion exchange technique disclosed in US-A-5,435,987 and International Patent Specification No. WO 95/03248. The starting zeolites most suitably have a unit cell size in the range of from 24.60 to 24.78 Å.

An important aspect of the starting zeolites is the low alkali level. The term alkali and alkali metal are used herein interchangeably. Both terms are generally used to indicate alkali metal oxide, for example sodium oxide and/or potassium oxide. The amount is easily determined by, for example, XRF - a quick chemical analysis technique. By XRF, our detection limit is 0.04 %wt, therefore a zeolite having no alkali or less than this amount of alkali will be recorded as having less than 0.04 %wt. Other determination techniques can assess lower levels. Most suitably the alkali level of the starting zeolite should be less than about 1 %wt, and desirably less than 0.5 %wt.

It has been found that the zeolites of the present invention having the highest surface area and desirable micropore volume can consistently be provided when both an acid and an ammonium salt are utilized in step c). However very useful materials, and in particular very high SAR zeolites, can be prepared when just an acid, preferably a strong acid, is used in the dealumination step c).

The conditions which are useful to produce the high surface zeolitic materials of the present invention will of course vary depending on the type of acid and optional ammonium salt used, and on the conditions such as temperature and time under which the dealumination step is performed. Generally the temperature and time conditions for the dealumination step c) and the concentration of acid and optional ammonium solutions used, all work together to achieve the desired result, for example if the temperature is not at a sufficiently high level, then insufficient aluminum ions will be removed in the step c) to achieve the desirable zeolites.

Step c) may be carried out at a temperature in the range of from ambient temperature, for example 20 °C, to 100 °C. Preferably an elevated temperature is used, most suitably in the range of from 40 to 80 °C. In the laboratory environment often the lower temperatures in the range are used; however on a commercial scale, the treatment temperatures may often be in the range of from 60 to 80 °C. If however materials having an exceptionally high silica to alumina ratio are particularly desired, then performing an acid-only dealumination at a temperature in the range of from 50 to 100, especially 80 to 100, in particular 80 to 95, °C has been found to be useful. The dealumination time may be in the range of from 0.5 hours to 10 hours, and is most conveniently from 1 to 5 hours. Naturally the higher the concentration of acid and optional ammonium salt used, the shorter the treatment time. Again, however, the timescale can vary from laboratory scale (where a batch treatment is usual) to the commercial scale (where continuous treatment is normal); in the latter the dealumination time may vary dependent on the throughflow of material in the treatment vessel.

The concentration of acid solution used is not critical. Useful materials have been prepared using hydrochloric acid in a concentration of as little as 0.7 milliequivalents H⁺ per g of zeolite to as much as 40. Most useful materials have been prepared using an acid dosage in the range of from about 5 to about 40, preferably from 9 to 20, milliequivalents H⁺ per g of zeolite.

Equally the concentration of ammonium salt, when used, is not critical. Useful materials may be prepared using a dosage of from about 5 to about 40 milliequivalents NH₄⁺ per g of zeolite and generally of, about 10 to 20 milliequivalents NH₄⁺ per g of zeolite. It is generally desired however to use sufficient ammonium salt so that used alone or in combination with acid, the final alkali content is below 0.1 % and more preferably below 0.04%.

It is possible to perform either a single step or a multi-step dealumination in order to preserve the crystallinity of the zeolite treated but also to ensure, where necessary, that a mild acid treatment is performed in each step. It is thus possible that a treatment with 20 milliequivalents H⁺ per g of zeolite can be performed in two steps using 10 milliequivalents in each. Most conveniently each step is carried out using the same dealuminant materials and under the same reaction conditions.

Acids that may be used in step c) are inorganic acids or organic acids, for example acetic, formic or oxalic acids. Preferred acids are inorganic or mineral acids, having a pKa below 0 - often termed 'strong acids' in the art. Non-limiting examples of inorganic acids that can be used in the process of the invention are selected from hydrochloric acid, nitric acid, and sulfuric acid. Preferably a monovalent acid such as hydrochloric and nitric acid is used. Usefully the acid is used in the form of an aqueous solution.

Generally any ammonium salt may be conveniently used; suitable examples are ammonium nitrate, ammonium chloride, and ammonium sulfate. Preferably the ammonium salt used is selected from ammonium nitrate and ammonium chloride.

As a result of the dealumination treatment the unit cell size decreases and the silica to alumina molar ratio increases from that of the intermediate zeolite.

Step b) is a steam calcination step. Such treatments are common in the art and may alternatively be called hydrothermal treatments. Both terms are used in this text. In the process of the present invention, it is useful for the steam calcinations to be carried out at a temperature in the range of from 600 to 800 °C, and preferably from 650 to 750 °C. The steaming is most usefully carried out for in the range of from 0.5 hours to 5 hours, preferably 1 to 3 hours.

Zeolites can be self-steamed where the steam water is provided by that which is released from the zeolite at high temperatures. In the present invention, steam is required preferably in an amount of at least 10% by volume (balance air, nitrogen or other inert gas). Usefully the steam is externally applied and not derived from the starting zeolite. Most preferably more than 90 % volume steam is present and especially about 100 %vol.

Most suitably the steam calcination treatment is carried out in two steps in which the first treatment is carried out at a different temperature than the second treatment. The temperature difference from first to second step or from beginning to end of a treatment is usefully from 10 to 100 °C, especially 20 to 50 °C. Care must be taken to ensure that hot spots do not occur in the treatment vessel, as this will yield zeolites of uneven properties.

The nature of the steaming treatment determines the conditions under which the dealumination treatment is carried out. For example using a slightly more severe steaming treatment (e.g. at a higher temperature) will cause a higher acid requirement to be needed to yield the high surface area zeolites. The best combination of conditions for the equipment and materials used can be routinely experimentally determined.

Preferably the hydrothermal treatment produces an intermediate material having a unit cell size in the range of from 24.33 to 24.38 Å. However if this unit cell size is not achieved, the high surface area zeolites can still be prepared through conducting the dealumination step under mild conditions, for example at a low temperature, low acid dose and for a short duration, or to utilize a two-step dealumination.

A very suitable combination of hydrothermal treatment and dealumination treatment is performing steam calcination at a temperature in the range of from 650 to 750 °C for 1 to 2 hours followed by an acid dealumination at a temperature in the range of from 40 to 95 °C for 2 to 4 hours at an acid dosage in the range of from 6 to 20 milliequivalents per gram, optionally using an ammonium salt dosage in the range of from 10 to 30 milliequivalents per gram.

Utilizing the process of the invention it is possible to prepare faujasite materials which have a unit cell size below about 24.40 angstroms, a surface area in excess of about 875 m²/g, a bulk silica to alumina molar ratio above about 13 and a useful micropore volume. Such materials are desirable for a wide range of uses, such as in adsorbency, selective separation, and pollution control.

The zeolites of the present invention find particular use as adsorbents, showing versatility in the type of material that can be adsorbed. Adsorption capability even at low partial pressure of adsorbate has been found for both polar and non-polar materials. This makes the zeolites of the present invention very attractive for general adsorbency use and for use in pollution control. As polar materials, water and polar hydrocarbons may be mentioned; as non-polar materials, non-polar hydrocarbons, such as aromatic hydrocarbons, for example benzene and toluene, may be mentioned. Accordingly the present invention also provides for use of the high surface area zeolites herein, preferably those having a SAR of 100 or more, as adsorbents.

The present invention will now be illustrated by the following Examples.

### Examples

In the Examples the following test methods have been used:
Unit cell size: Determined by X-ray diffraction using the method of ASTM D-3942-80.
Surface Area: Determined in accordance with the conventional BET (Brunauer-Emmett-Teller) method nitrogen adsorption technique as described in the literature at S. Brunauer, P. Emmett and E. Teller, J. Am. Chm. Soc., 60, 309 (1938), and ASTM method D4365-95. Samples are pretreated before measurement at 500 °C for 4 hours. In the determinations quoted below, the results are given as multi-point assessments from measurements taken at a range of nitrogen partial pressures of p/po of 0.02, 0.03 and 0.04.
Silica to alumina molar ratio (SAR): Determined by chemical analysis (either using X-ray fluorescence or atomic adsorption). Values quoted are 'bulk' SAR (that is to say the overall SAR) and not specifically the SAR of the crystalline framework. Total pore volume: Determined via the BET method.
Micropore volume: Assessed by the t-plot method, also known as the t-method, using nitrogen as the adsorbate as described by Lippens, Linsen and de Boer, Journal of Catalysis, 3,32 (1964).
Crystallinity: Determined by modification to ASTM D3906-97: this utilizes X-ray diffraction, and is expressed as the percentage retained or increased crystallinity of the final zeolite relative to a standard zeolite Y. Since the materials of this invention are all of the low unit cell variety, we have chosen to report their relative crystallinity versus a material of like kind, i.e a standard with similar unit cell size. Therefore, conclusions reached are valid in relation to that standard or more importantly in and among the data presented herein. In any event the micropore volume should be used as a more definitive measure of the zeolite content of these type materials and these crystallinity data used only for corroboration.
Comments on the Method of Surface Area-Micro Pore Volume Analysis:
Zeolite quality has in the literature generally been described using BET surface area. The surface area data presented here have been determined by the general procedure described in ASTM method D4365-95. The specific recommendation in the ASTM method is that for high zeolite content materials the linear BET range is preferentially found between p/p_{O} values of 0.01 and 0.09. The method further states that emphasis on the lower p/p_{O} values should be used if a negative intercept is observed. In addition Johnson (Journal of Catalysis 52, 425-431 (1978), "Estimation of the Zeolite Content of a Catalyst from Nitrogen Adsorption Isotherms") clearly shows that very little adsorption of nitrogen occurs above a p/p_{O} value of 0.05 with zeolite Y and zeolite Y catalysts. Therefore, we have selected the adsorption at nitrogen partial pressures of 0.02, 0.03 and 0.04 p/p_{O} as the most suitable from which to calculate a BET surface area for the zeolites herein.

The materials described in these Examples contrast in particular in surface area compared to generally available, commercially available dealuminated materials and those documented in the literature of the art. Care must be taken to compare them to materials with similar unit cell dimensions. (For example, WO 00/20332 discloses faujasite zeolitic materials with a surface area of at least 800 m²/g but at a unit cell size range of 24.40 to 24.65 Å.) Such materials have in the patent literature been referred to as "Ultrahydrophobic zeolite Y" (UPHY). GB-A-2,014,970 describes materials with unit cell parameters less than 24.45 angstroms as having BET surface areas from 450 m²/g to about 600 m²/g. US 4,401,556 describes the use of such UPHY materials (and catalysts based on them) having surface areas in the range of from 520 to 579 m²/g. EP-A-421 422 documents zeolites that have recorded BET surface areas of from 586 to 752 m²/g.

Commercially available materials are also referenced in the literature. In particular US 5,234,876 references "Ultra-stable Y-zeolite" materials, TSZ-350 and TSZ-360 available from Tosoh Corporation with BET surface areas ranging from 600 to 650 m²/g. Similarly, Bezman in Catalysis Today, 13, 143-156 (1992) describes hydrothermally dealuminated Y-type zeolites (HDY's) available from the Linde Division of UOP, specifically LZ-Y20 and from PQ Corporation, specifically CBV 600 and CBV 712. All these materials are reported to have BET surface areas between 500 and 700 m²/g.

### Preparation of zeolites

Zeolites of the present invention and comparative zeolites were prepared by the following general procedures.

In these Examples, the starting materials are low alkali content (<1.5 %wt alkali oxide) ammonium form Y zeolites. These zeolites are prepared by one of two methods known in the art. While not meaning to be exclusive of other methods of achieving similar results, the examples were prepared by either the Cooper method (as described in U.S. Patent Specification No. 5,435,987) which involves K⁺ ion exchange of Na form zeolite Y, followed by ammonium ion exchange, or by the Alafandi method (as described in U.S. Patent Specification No. 4,085,069) which involves ammonium exchange under autogenous superatmospheric pressure. The chemical analysis of the starting zeolites along with the details of method of preparation is indicated in Table 1.

The low alkali content ammonium form Y zeolites were steam calcined in either one or two steps to create an ultrastable type Y zeolite. The steamed zeolites were then subjected to an acid-dealumination treatment consisting of either a one or two-step treatment with a combination of an ammonium salt and an inorganic acid. The specific details of the steaming treatment(s) and the acid-dealumination treatment are also given in Table 1. The water content in the acid-dealumination treatment was generally sufficient to provide a zeolite slurry with from 5 to 25%wt anhydrous zeolite. Such variation is not believed to materially affect the results obtained.

Product properties of the materials of Examples 1 to 14 are given in Table 2.

Examples 1 to 4 and 6 to 10 are according to the invention.

Examples 5 and 11 to 14 are comparative.

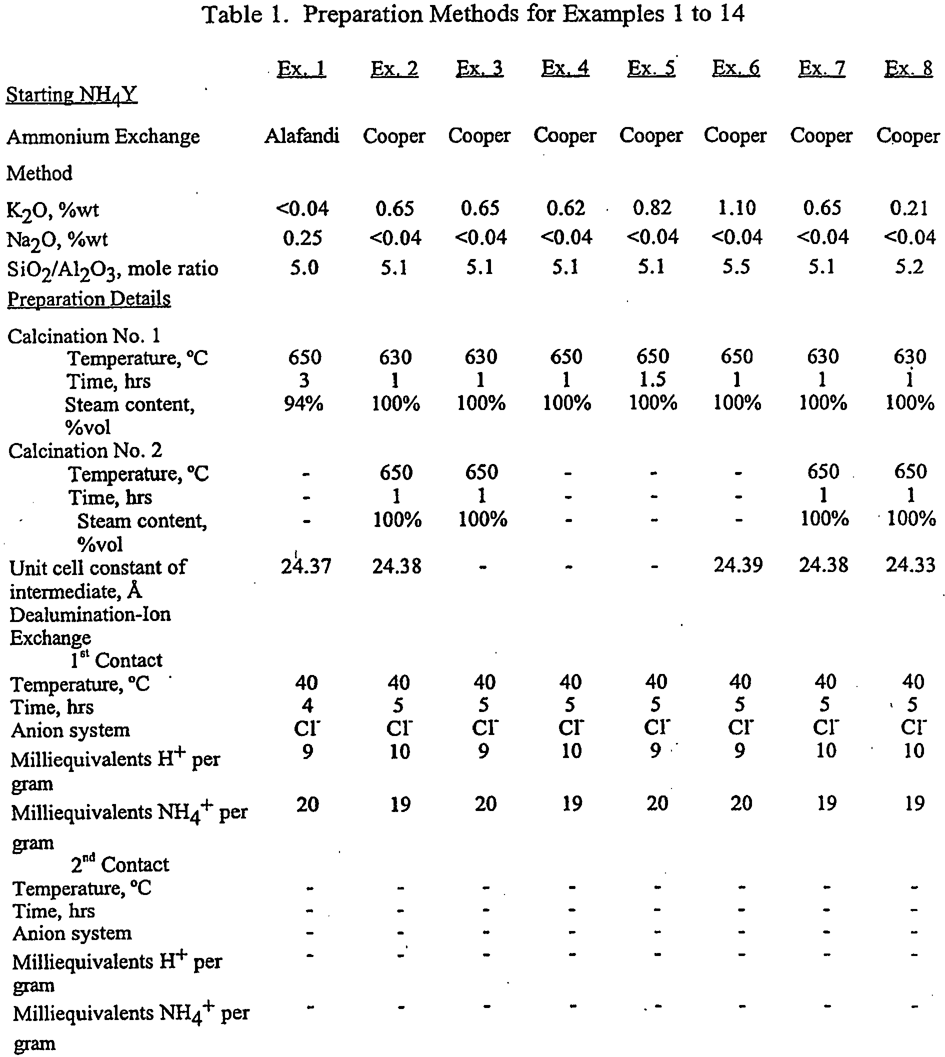

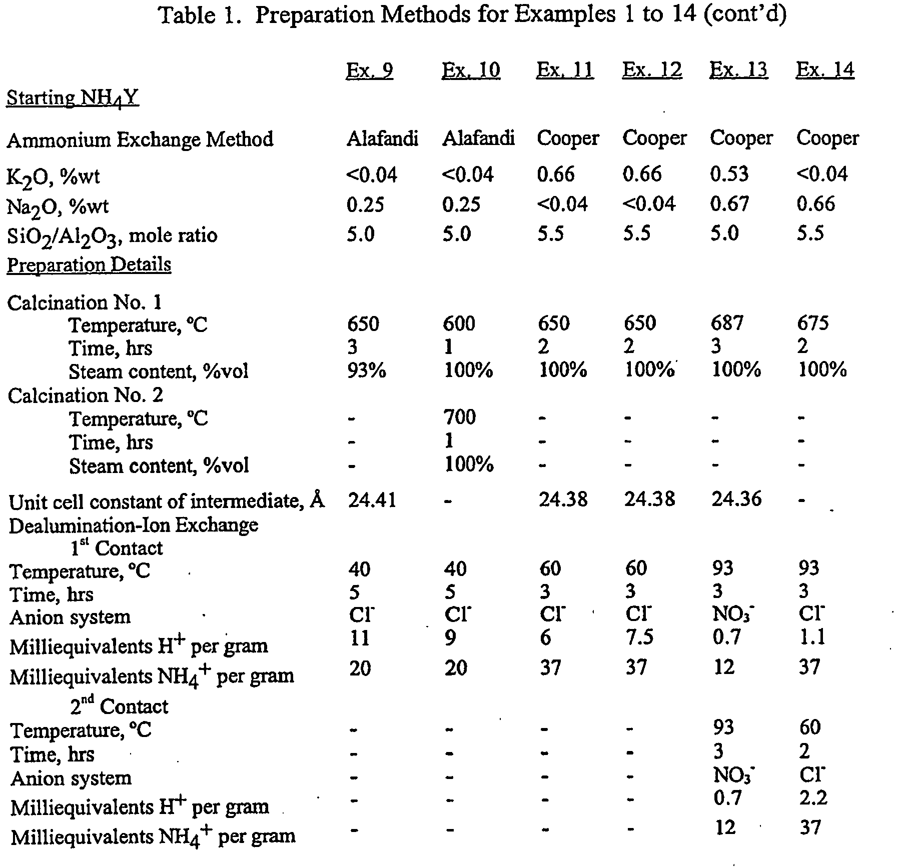

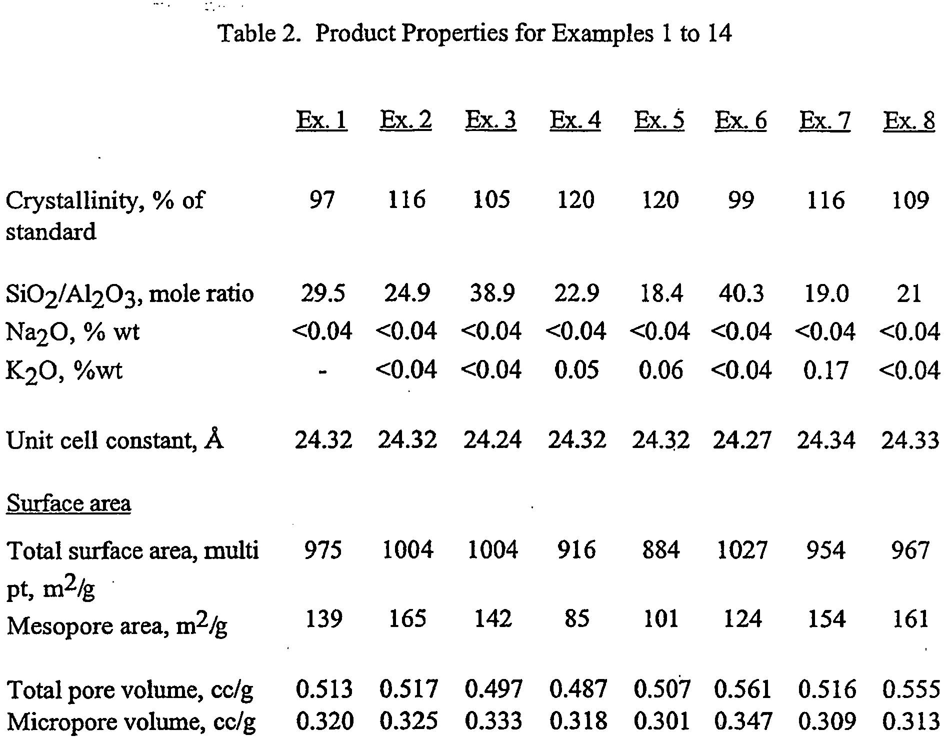

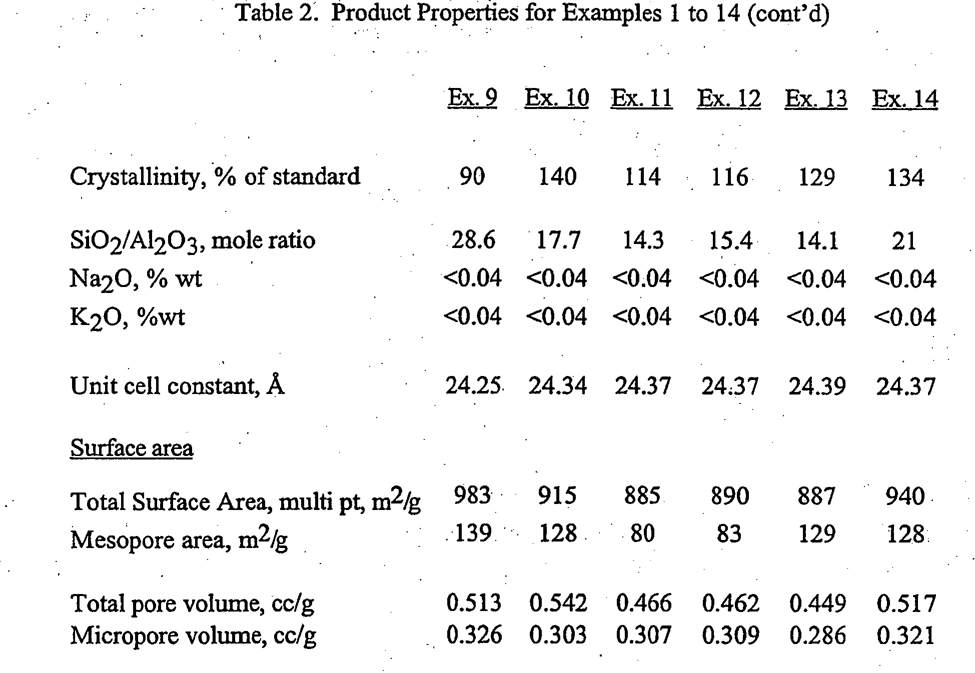

### Comparative Examples C1 to C11

In these comparative examples, the starting materials are similar to the low alkali content (<1.5 %wt alkali oxide) ammonium form Y zeolites in the previous Examples. Similarly the steaming and ion exchange-dealumination treatment(s) follow the same general order of process steps, and also a combination of ammonium salt and an acid were used in the dealumination-ion exchange step. However the steaming step is not sufficiently severe and/or the ion exchange-dealumination condition(s) given in Table 3 contain insufficient acid to affect the proper chemical dealumination. The product properties produced by these procedures are given in Table 4. It can be seen that all are at or below a silica to alumina molar ratio (by chemical analysis) of 13 and do not achieve the desired high surface area.

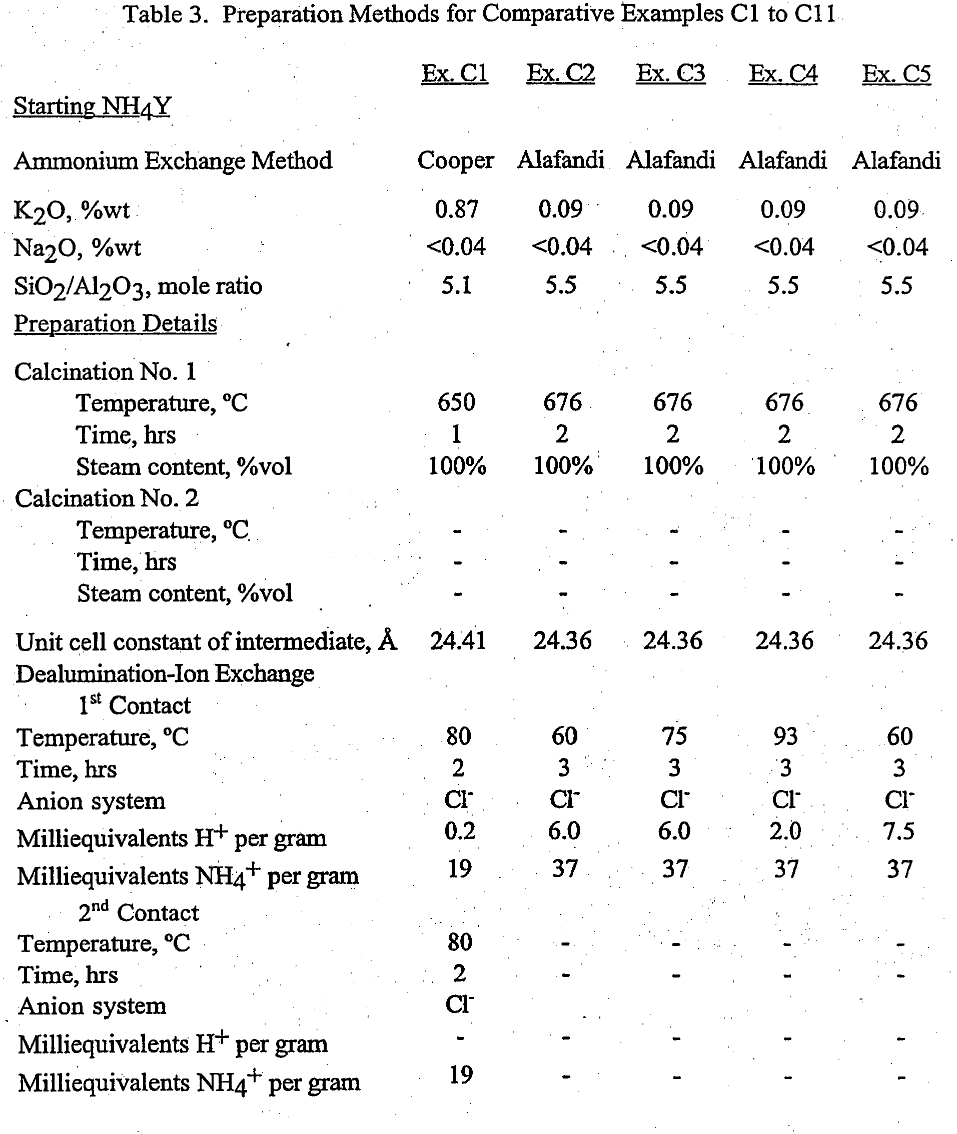

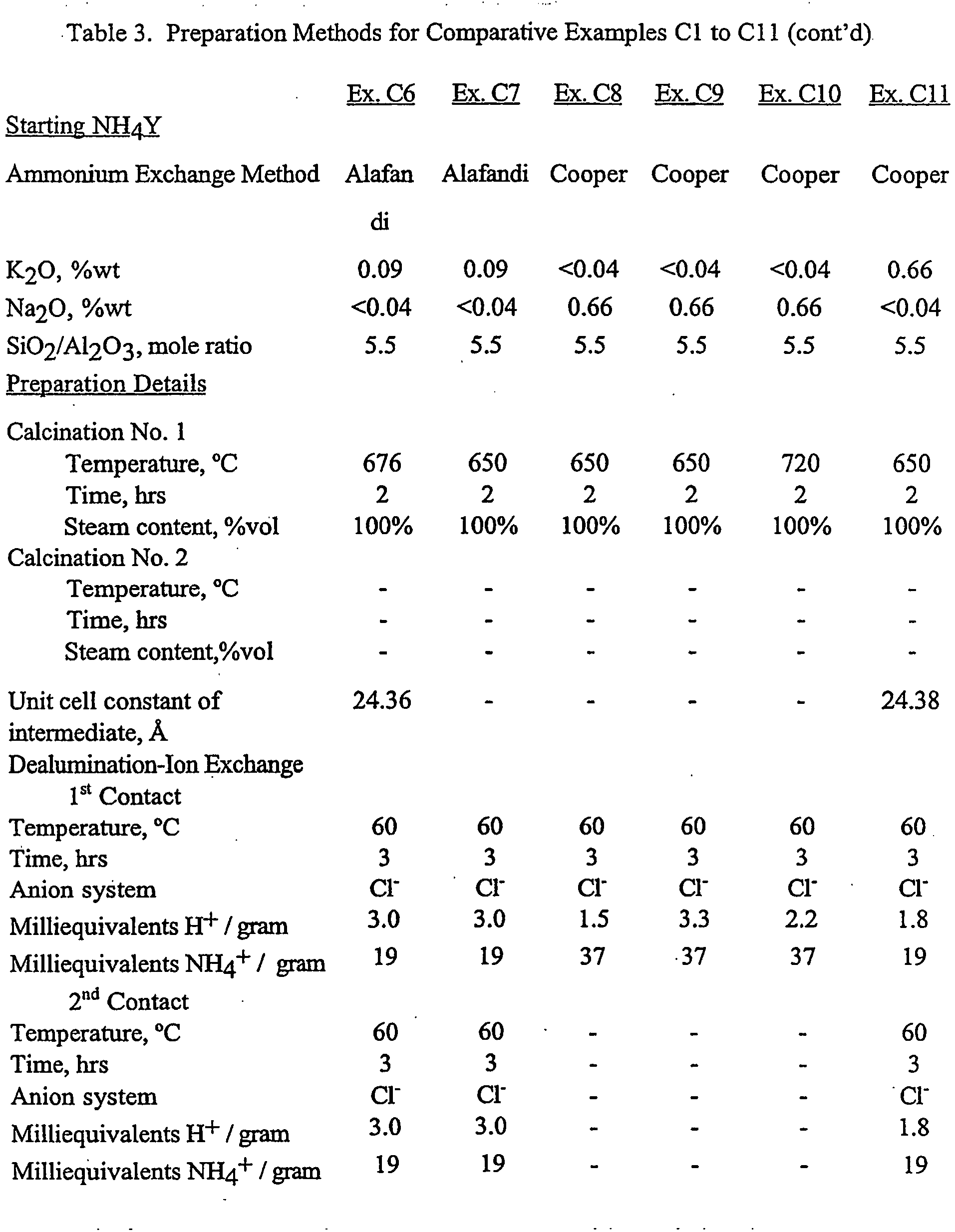

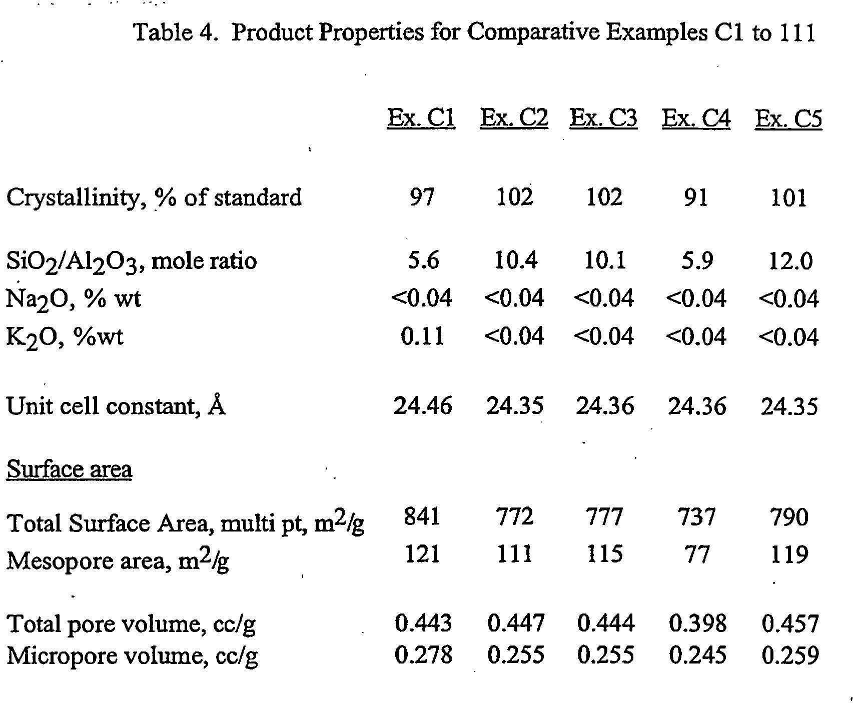

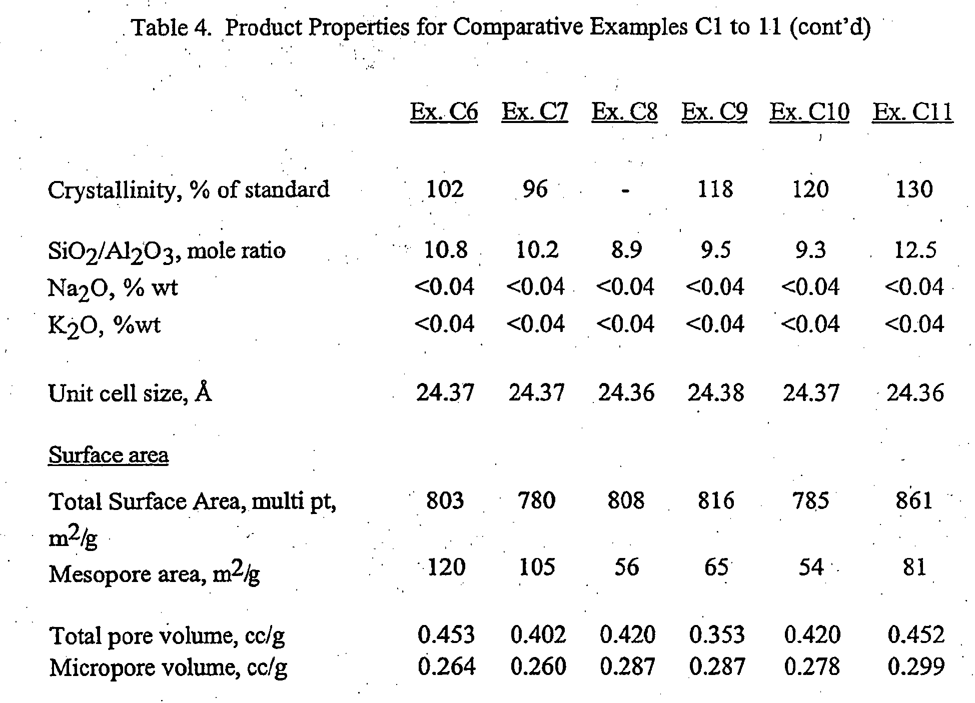

### Examples 15 to 24 and Comparative Examples C12 to C16

In these Examples, the use of an inorganic acid alone in the dealumination-ion exchange step is demonstrated to be able to provide zeolites of the present invention having high surface areas, and an exceptionally wide range of high silica to alumina molar ratios.

As in the previous examples, the starting materials leading to products of the invention are low alkali content (<1.5% alkali oxide) ammonium form Y zeolites prepared by either the Cooper method which involves K⁺ ion exchange of Na form zeolite Y, followed by ammonium ion exchange, or by the Alafandi method which involves ammonium exchange under autogenous superatmospheric pressures. Comparative examples C13 to C16 however start with higher alkali content ammonium form Y zeolites made by industry standard methods of ammonium ion exchange at atmospheric pressure at temperature ranges of ambient to near boiling. The chemical analysis of the starting zeolites along with the general method of preparation is given in Table 5.

As noted above, the low alkali content ammonium form Y zeolites were steamed in either one or two steps to create an ultrastable type Y zeolite. As also noted above, the steamed zeolites were then subject to a dealumination treatment consisting of either a one or two step treatment with acid only. The specified details of the steaming treatment(s) and the dealumination treatment(s) are also given in Table 5. The water content in the dealumination treatment was generally sufficient to provide a zeolite slurry with from 5 to 25%wt anhydrous zeolite. Such variation is not believed to materially affect the results obtained.

Product properties of the materials of Examples 15 to 24 are given in Table 6.

Examples 15 to 18 and 21 are according to the invention.

Examples 19, 20 and 22 to 24 are comparative.

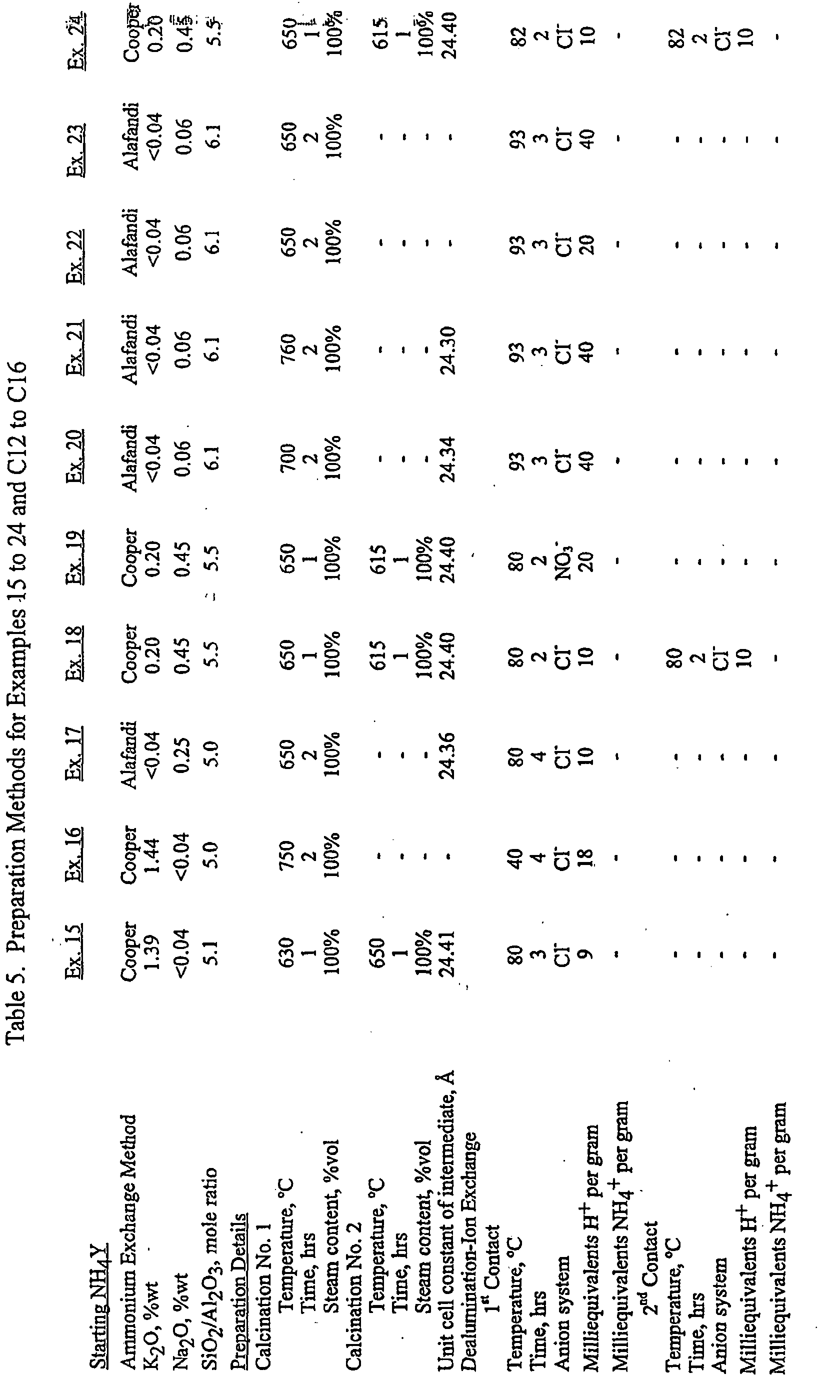

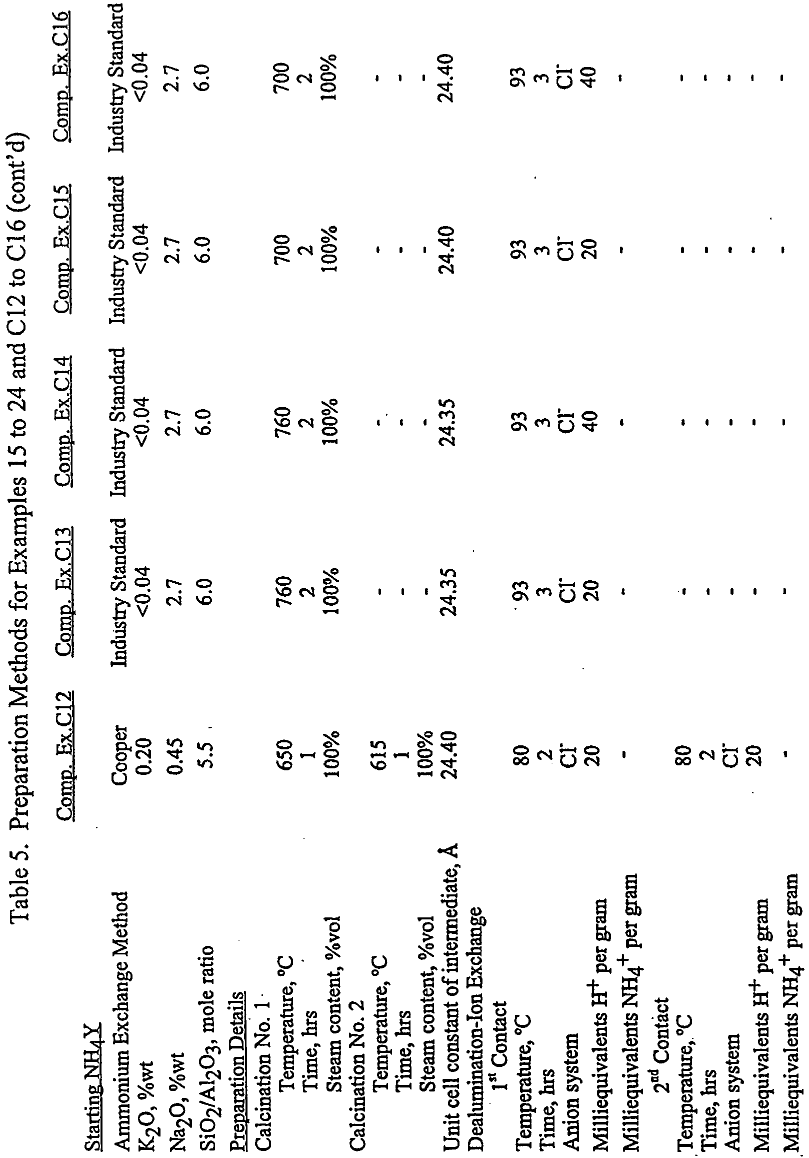

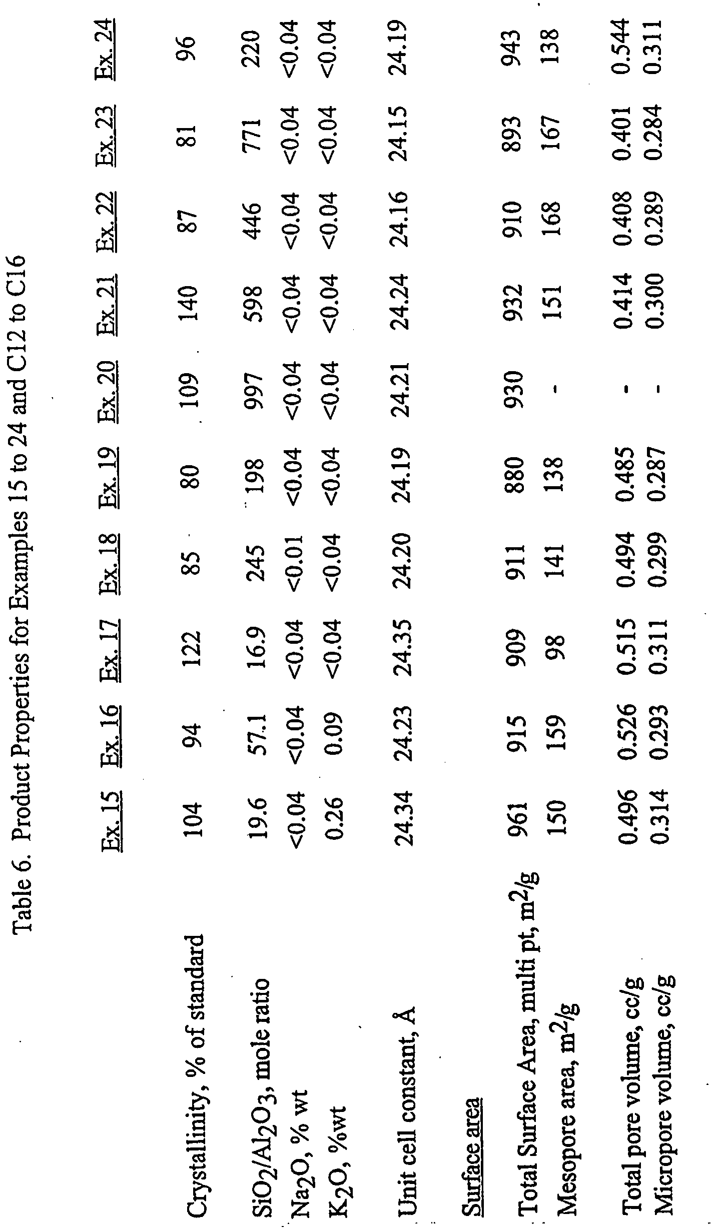

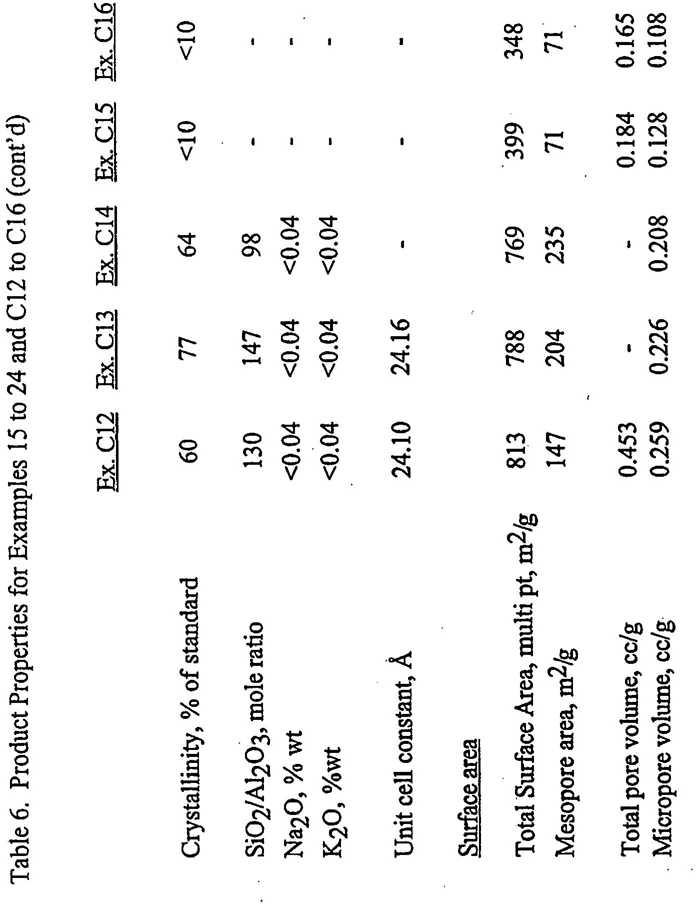

Comparative Example C12 describes the preparation of a material that has been insufficiently stabilized by the steaming treatment to withstand the acid treatment. Direct comparison to Example 13 and Example 24 shows that milder acid treatments lead to materials consistent with the invention. Comparison with Example 19 shows that a single step dealumination using nitric acid (a less dissociated, lower strength acid than hydrochloric acid, as measured by pKa) on the same material also leads to materials consistent with the invention.

Comparative Example C13 to C16 show that the alkali content of the starting NH₄Y is critical to achieving the desired properties. These materials all began with a 2.7 %wt alkali content NH₄Y material and did not produce materials consistent with the invention, despite being subjected to similar steaming and dealumination procedures as per Examples 20 to 24.

In order to have the desired properties of a very high surface area and micropore volume, an appropriate combination of steaming severity and ion exchange-dealumination severity must be applied. If the precursor is too mildly steamed then it may not be sufficiently stable to a severe acid-ammonium treatment, resulting in low surface area. Such a material is described in Comparative Example C12. If the material is over steamed, too much crystal structure damage will occur so that the high surface area and micropore volumes will not be achieved. Similarly, if the ammonium-acid treatment is too mild, the amorphous debris created in the steaming will not be sufficiently removed, the SAR will not fall into the desired range and the surface area will be low. This is shown clearly in Comparative Examples C1 to C11.

### Example 25 - Activity testing

The zeolites of the present invention find application in the wide range of uses well known for ultrastable faujasites. The retained or high crystallinity coupled with low unit cell size range, high surface area and the exceptional range of silica to alumina ratios make the zeolites of the present invention particularly of use in adsorption for a range of materials including water and hydrocarbon materials, eg. toluene.

In this Example, the adsorption capability for water and for toluene is measured for a zeolite of the present invention, that of Example 24, and for a commercially available, dealuminated zeolite Y. The commercially available material tested is designated CBV 780, and was obtained from Zeolyst International. The obtained material was tested under the same standard test methods given above to evaluate surface area, SAR, crystallinity, and unit cell size.

Both materials were assessed for their toluene and water adsorption by first activating the zeolite at 500 °C under vacuum for 0,5 hours and then allowing contact with sufficient quantity of specified adsorbate gas to allow complete available adsorption at the specified partial pressure and temperature. The physical properties of the tested zeolites, and their adsorption capabilities are shown in Table 7.

It can clearly be seen that the zeolite of Example 24, having the higher micropore volume, and in particular the higher surface area inherent with zeolites of the present invention, exhibits a superior adsorption capacity even at low partial pressures of adsorbate compared to the commercially available zeolite Y material.

**Table 7**

| | Zeolite of Example 24 | Commercially obtained CBV 780 |
|---|---|---|
| Crystallinity, % of standard | 96 | 72 |
| | | |
| SiO₂/Al₂O₃, mole ratio | 220 | 79 |
| Na₂O, %wt | <0.04 | <0.04 |
| K₂O, %wt | <0.04 | <0.04 |
| | | |
| Unit cell constant, A | 24.19 | 24.23 |
| | | |
| Surface area | | |
| Total Surface Area, multi pt, m²/g | 943 | 866 |
| Micropore area, m²/g | 805 | 703 |
| Mesopore area, m²/g | 138 | 163 |
| | | |
| Total pore volume, cc/g | 0.544 | 0.548 |
| Micropore volume, cc/g | 0.311 | 0.274 |
| Mesopore volume, cc/g | 0.233 | 0.274 |
| | | |
| Adsorption | | |
| Toluene adsorption, %wt | | |
| @ 0.28 torr, p/po = 0.01 | 19.2 | 15.1 |
| | | |
| H₂O adsorption after 2 hours, %wt | | |
| @ 4.6 torr, p/po = 0.22 | 6.6 | 3.4 |
| @ 10.0 torr, p/po = 0.47 | 12.5 | 8.7 |

## Claims

1. A zeolite of the faujasite structure having a bulk silica to alumina molar ratio from 16 to 1000, **characterized by**:
a unit cell size in the range of from 24.20 to 24.35 Å,
a surface area of from 900 to 1030 m²/g as measured by the BET method and ASTM D4365-95 with nitrogen adsorption at p/po values of 0.02, 0.03 and 0.04, and
a micropore volume from 0.29 to 0.35 cm³/g.

2. The zeolite of claim 1, which has an alkali level of less than 0.5 weight percent based on the zeolite.

3. The zeolite of claim 1, which has a silica to alumina molar ratio in the range of from 50 to 1000.

4. A zeolite as claimed in claim 1, which has a micropore volume of 0.30 to 0.35 cm³/g.

5. The use of a high surface area zeolite of claim 1 as adsorbent for polar and/or non-polar material.

6. The use according to claim 5, wherein the polar material is water and the non-polar material is an aromatic hydrocarbon.

7. A process for the preparation of a high surface area zeolite of the faujasite structure according to any of claims 1 to 4 which comprises:
a) providing a starting zeolite of the faujasite structure having a silica to alumina ratio of from 4.5 to 6.5 and an alkali metal level of less than 1.5%wt;
b) hydrothermally treating said starting zeolite at a temperature in the range of from 600 to 850 °C and at a partial pressure of steam of 0.2 to 1 atmosphere for a time effective to produce a intermediate zeolite having a unit cell size of from 24.30 to 24.45 Å;
c) contacting the intermediate zeolite with an acidified solution comprising an acid and optionally an ammonia salt under conditions effective to produce the high surface area zeolite; and
d) recovering the high surface area zeolite.

8. The process of claim 7, wherein in step b) the temperature is in the range of from 650 to 750 °C.

9. The process of claim 7, wherein in step c) solely an acid is present in the acidified solution.

10. The process of claim 7, wherein the acid treatment is applied at a temperature in the range of from 20 to 100 °C.

11. The process of claim 10, wherein the acid treatment is applied at a temperature in the range of from 50 to 100 °C.

12. The process of claim 11, wherein the acid treatment is applied at a temperature in the range of from 80 to 100 °C.

13. The process of claim 7, wherein the acid is hydrochloric or nitric acid.

## Patentansprüche

1. Zeolith der Faujasitstruktur, der ein massenbezogenes Molverhältnis von Siliciumdioxid zu Aluminiumoxid von 16 bis 1000 aufweist, **gekennzeichnet durch** eine Einheitszellgröße im Bereich von 24,20 bis 24,35 Å,
einen Oberflächenbereich von 900 bis 1030 m²/g, wie **durch** die BET-Methode und ASTM D4365-95 bei einer Stickstoffadsorption bei P/Po-Werten von 0,02, 0,03 und 0,04 gemessen und
ein Mikroporenvolumen von 0,29 bis 0,35 cm³/g.

2. Zeolith nach Anspruch 1, der ein Alkaliniveau von weniger als 0,5 Gewichtsprozent, auf den Zeolith bezogen, aufweist.

3. Zeolith nach Anspruch 1, der ein Molverhältnis von Siliciumdioxid zu Aluminiumoxid im Bereich von 50 bis 1000 aufweist.

4. Zeolith nach Anspruch 1, der ein Mikroporenvolumen von 0,30 bis 0,35 cm³/g aufweist.

5. Verwendung eines Zeoliths von hohem Oberflächenbereich nach Anspruch 1 als Adsorptionsmittel für polares und/oder nichtpolares Material.

6. Verwendung nach Anspruch 5, wobei das polare Material Wasser ist und das nichtpolare Material ein aromatischer Kohlenwasserstoff ist.

7. Verfahren zur Herstellung eines Zeoliths von hohem Oberflächenbereich der Faujasitstruktur nach einem der Ansprüche 1 bis 4, der Folgendes umfasst:
a) das Bereitstellen eines Ausgangszeoliths der Faujasitstruktur, der ein Verhältnis von Siliciumdioxid zu Aluminiumoxid von 4,5 bis 6,5 und ein Alkalimetaniveau von weniger als 1,5 Gew.-% aufweist.
b) das hydrothermale Behandeln des Ausgangszeoliths bei einer Temperatur im Bereich von 600 bis 850 °C und einem Partialdruck von Dampf von 0,2 bis 1 Atmosphäre für eine Zeitspanne, die wirksam ist zum Herstellen eines Zwischenzeoliths, der eine Einheitszellgröße von 24,30 bis 24,45 Å aufweist,
c) das Kontaktieren des Zwischenzeolits mit einer angesäuerten Lösung umfassend eine Säure und wahlweise ein Ammoniaksalz unter Bedingungen, die wirksam sind, einen Zeolith von hohem Oberflächenbereich herzustellen; und
d) das Gewinnen des Zeoliths von hohem Oberflächenbereich.

8. Verfahren nach Anspruch 7, wobei in Schritt b) die Temperatur im Bereich von 650 bis 750 °C liegt.

9. Verfahren nach Anspruch 7, wobei in Schritt c) nur eine Säure in der angesäuerten Lösung vorliegt.

10. Verfahren nach Anspruch 7, wobei die Säurebehandlung bei einer Temperatur im Bereich von 20 bis 100 °C angewendet wird.

11. Verfahren nach Anspruch 10, wobei die Säurebehandlung bei einer Temperatur im Bereich von 50 bis 100 °C angewendet wird.

12. Verfahren nach Anspruch 11, wobei die Säurebehandlung bei einer Temperatur im Bereich von 80 bis 100 °C angewendet wird.

13. Verfahren nach Anspruch 7, wobei die Säure Salz- oder Salpetersäure ist.

## Revendications

1. Zéolite de la structure faujasite ayant un rapport molaire apparent silice sur alumine de 16 à 1 000, **caractérisée par**:
une taille de cellule unitaire située dans la plage de 24,20 à 24,35 Å,
une surface active de 900 à 1 030 m²/g telle que mesurée par le procédé BET et la norme ASTM D4365-95 avec une adsorption d'azote aux valeurs p/po de 0,02, 0,03 et 0,04, et
un volume de micropores de 0,29 à 0,35 cm³/g.

2. Zéolite selon la revendication 1, qui a une teneur en substances alcalines inférieure à 0,5 pour cent en poids sur la base de la zéolite.

3. Zéolite selon la revendication 1, qui a un rapport molaire silice sur alumine situé dans la plage de 50 à 1 000.

4. Zéolite telle que revendiquée selon la revendication 1, qui a un volume de micropores de 0,30 à 0,35 cm³/g.

5. Utilisation d'une zéolite de surface active élevée selon la revendication 1 comme agent adsorbant pour matériau polaire et/ou non polaire.

6. Utilisation selon la revendication 5, le matériau polaire étant l'eau et le matériau non polaire étant un hydrocarbure aromatique.

7. Procédé de préparation d'une zéolite à surface active élevée de la structure faujasite selon l'une quelconque des revendications 1 à 4 qui comprend:
a) la fourniture d'une zéolite de départ de la structure faujasite ayant un rapport silice sur alumine de 4,5 à 6,5 et une teneur en métal alcalin inférieure à 1,5 % en pds;
b) le traitement de manière hydrothermique de ladite zéolite de départ à une température située dans la plage de 600 à 850°C et à une pression partielle de vapeur de 0,2 à 1 atmosphère sur une durée efficace pour produire une zéolite intermédiaire ayant une taille de cellule unitaire de 24,30 à 24,45 Å;
c) la mise en contact de la zéolite intermédiaire avec une solution acidifiée comprenant un acide et éventuellement un sel d'ammoniac sous des conditions efficaces pour produire la zéolite à surface active élevée; et
d) la récupération de la zéolite à surface active élevée.

8. Procédé selon la revendication 7, dans lequel dans l'étape b) la température se situe dans la plage de 650 à 750°C.

9. Procédé selon la revendication 7, dans lequel dans l'étape c) uniquement un acide est présent dans la solution acidifiée.

10. Procédé selon la revendication 7, le traitement acide étant appliqué à une température située dans la plage de 20 à 100°C.

11. Procédé selon la revendication 10, le traitement acide étant appliqué à une température située dans la plage de 50 à 100°C.

12. Procédé selon la revendication 11, le traitement acide étant appliqué à une température située dans la plage de 80 à 100°C.

13. Procédé selon la revendication 7, l'acide étant l'acide chlorhydrique ou l'acide nitrique.
